# EUROPEAN PATENT SPECIFICATION

(11) **EP 4 517 723 B1**
(45) Date of publication and mention of the grant of the patent: **11.11.2026**
(21) Application number: 24212056.6
(22) Date of filing: 12.05.2015
(51) Int. Cl.: B05D 3/00, B05D 5/06, B05D 1/16, G09F 19/14, G09F 3/10

(54) **OPTICALLY VARIABLE DEVICE COMPRISING MAGNETIC FLAKES**
OPTISCH VARIABLE VORRICHTUNG MIT MAGNETISCHEN FLOCKEN
DISPOSITIF OPTIQUEMENT VARIABLE COMPRENANT DES PAILLETTES MAGNÉTIQUES

(30) Priority: 12.05.2014 US 201461992093 P
(43) Date of publication of application: 05.03.2025
(62) Document number(s) of the earlier application(s) in accordance with Art. 76 EPC: 19159771.5 / 3 527 293; 15167387.8 / 2 944 381
(73) Proprietor: Viavi Solutions Inc., Chandler, AZ 85286 (US)
(72) Inventor: ARGOITIA, Alberto, Santa Rosa, CA 95405 (US); DELST, Cornelis Jan, Fairfax, CA 94930 (US); LADEN, Patrick, Petaluma, CA 95954 (US)
(74) Representative: Murgitroyd & Company

(56) References cited:
- EP-A1- 1 832 439
- WO-A2-2011/012520
- US-A- 5 171 363
- US-A1- 2004 009 309
- US-A1- 2010 208 351

## Description

### TECHNICAL FIELD

The present disclosure relates to optically variable devices including magnetically alignable flakes, and a method of manufacture of same.

### BACKGROUND

Optically variable devices are optical devices whose optical performance depends on angle of incidence of illuminating light or angle of observation. A common example of an optically variable device is an iridescent security feature used as an anti-counterfeiting measure on banknotes, credit cards, stock certificates, government-issued identification documents, etc. An optically variable device may provide a visually varying image, for example an illusory three-dimensional (3D) image, a color-shifting image, or both. Such an image is difficult to counterfeit without knowledge of a specific recipe used to manufacture the optical variable device providing the image.

Optically variable devices may be made by coating a surface with an ink or paint including flat platelet-like reflective and, or color-shifting particles. Such surfaces show higher reflectance and brighter colors than surfaces coated with a paint or ink containing conventional pigments. Substrates painted or printed with color-shifting flaked pigments may show change of color when viewed at different angles.

Flaked pigments may contain a material that is magnetically sensitive, so as to be alignable or orientable in an applied magnetic field. Such flakes may be manufactured from a combination of magnetic and non-magnetic materials and mixed with a paint or ink vehicle in the production of magnetic paints or inks. A feature of these products is the ability of the flakes to become oriented along the lines of an applied field inside of a layer of liquid paint or ink, while substantially remaining in this position after drying or curing of the paint or ink vehicle. Relative orientation of the flake and its major dimension with respect to the coated surface determines the level of reflectance or its direction and, or may determine angle-dependent color or brightness of the paint or ink.

By way of example, Phillips et al. in US Patent 6,808,806 disclose methods and devices for producing color-shifting images on coated articles using magnetically alignable flakes including color-shifting coatings. The color-shifting images are defined by the magnetic field applied to the coatings as the coatings are dried or cured. For example, a sheet magnet shaped as a symbol, a letter, or another indicia may be brought in close proximity to the coating during cure. After the coating is cured, the sheet magnet is removed, and the indicia may be seen as a color-shifting image on the coating. The magnetic field application may be adapted for modern printing environments; for example, Raksha et al. in US Patent Application Publication 2005/0106367 disclose a method and apparatus for orienting magnetic flakes in high-speed, linear printing operation.

A 3D illusive image may also be formed on the painted product by applying a spatially varying magnetic field to the surface of the product while the paint still is in the liquid state. When the paint is cured and the magnetic field is removed, the 3D illusive image remains visible on the surface of the painted product. The 3D illusive image appears because light rays incident on the paint layer are influenced differently by differently oriented magnetic particles. Raksha et al. in US Patent 7,934,451 disclose a method and apparatus to orient magnetic flakes in desired 3D patterns in a high-speed linear printing apparatus.

Despite interesting and often intriguing optical effects produced by solidified suspensions of magnetic flakes, their application in optical security devices has been somewhat limited, in particular for banknotes. The application of magnetically alignable flake suspensions in banknotes and other valuable documents may be hindered by a poor compatibility of two main printing processes mostly used in manufacturing of banknotes - offset printing and Intaglio printing - with magnetically alignable particle suspensions. An offset printing process typically produces a very thin ink film thickness, and as such, cannot transfer large magnetic particles, for example particles that are 30 micrometers in size. An Intaglio printing process typically uses a highly viscous ink, which does not allow efficient alignment of magnetic particles suspended in the ink, at least without taking special measures to lessen the viscosity of the ink while applying a magnetic field, as is disclosed by Raksha et al. in US Patent 8,211,509. US 2010/208351A1, US 2004/009309A1 , WO2011/012520A2 and EP1832439A1 are also useful in understanding the present invention.

### SUMMARY

In accordance with an aspect of the disclosure, there is provided a method of manufacturing an optically variable device as defined in the claims. The method comprises:
providing a substrate with an first adhesive layer thereon;
applying a first magnetic field to the first adhesive layer and providing magnetic flakes absent a liquid carrier or binder onto the first adhesive layer in the presence of the first magnetic field so that the magnetic flakes oriented by the first magnetic field adhere to the first adhesive layer;
coating the first adhesive layer and the magnetic flakes adhered thereto with a coating layer; and
curing the coating layer, so as to substantially maintain orientation of the magnetic flakes, wherein the first adhesive layer comprises voids, so as to form visible indicia.

The first adhesive layer may be only partially cured during depositing the magnetic flakes thereon. The substrate may include a release layer, in which case the coating layer may be adhered to a second substrate, and the release layer may be removed, to obtain a "flipped" orientation pattern of the magnetic flakes. The method may be adaptable to high printing speeds.

In one embodiment, a second adhesive layer may be provided on top of the first adhesive layer or beside the first adhesive layer. A second magnetic field may be applied to the second adhesive layer, and second magnetic flakes absent a liquid carrier or binder may be provided onto the second adhesive layer in the presence of the second magnetic field, so that the second magnetic flakes oriented by the second magnetic field adhere to the second adhesive layer. After this, the second adhesive layer may be cured.

In accordance with the disclosure, there is further provided a method of manufacturing an optically variable device, the method comprising:
providing a substrate with an adhesive layer thereon;
applying a magnetic field to the adhesive layer;
separately applying magnetic flakes and a coating to the adhesive layer, by initially applying the magnetic flakes absent a liquid carrier or binder, causing the magnetic flakes to adhere to the adhesive layer, wherein the magnetic flakes adhered to the adhesive layer are oriented by the magnetic field; and, after the magnetic flakes have been applied to the adhesive layer, applying the coating to the adhesive layer so as to form a coating layer on the adhesive layer, wherein the coating layer encapsulates the magnetic flakes; and
curing the coating layer, so as to substantially maintain orientation of the magnetic flakes, wherein the first adhesive layer comprises voids, so as to form visible indicia.

In accordance with the disclosure, there is further provided an optically variable device comprising a substrate; an adhesive layer over the substrate; a plurality of oriented magnetic flakes supported by the adhesive layer; and a coating layer over the substrate adjacent the adhesive layer. The coating may encapsulate the magnetic flakes extending from the adhesive layer, so that a portion of each one of the plurality of oriented magnetic flakes is adhesively attached to the adhesive layer, and a remaining portion of the same magnetic flake extends out of the adhesive layer into the coating layer, wherein the first adhesive layer comprises voids, so as to form visible indicia.

In one embodiment, the adhesive layer is disposed on the substrate, and the coating layer is disposed on the adhesive layer. The coating covering the flakes on the adhesive layer may be of the same material as the adhesive layer, or may be a different material. The magnetic flakes may be partially disposed in the adhesive layer. In one embodiment, the magnetic flakes are reflective, and may include color-shifting multilayer coatings. By carefully selecting magnets to generate the magnetic fields, the magnetic flakes may be oriented so as to create a visual appearance of a 3D object such as a hemisphere, a cone, a funnel, a combination of different images obtained at separated stations, etc. The magnetic alignment may be repeated to create other images on top or aside a first image.

### BRIEF DESCRIPTION OF THE DRAWINGS

Exemplary embodiments will now be described m conjunction with the drawings, in which:
FIG. 1 is a flow chart of a method of manufacturing an optically varying device that lead to embodiments of the present disclosure;
FIGs. 2A-2H are side cross-sectional views of an optically variable device of the present disclosure at different progressive stages of manufacturing;
FIG. 2I is a magnified view of a single flake of the optically variable device of FIG. 2H, attached to an adhesive layer;
FIG. 3A is a schematic side cross-sectional view of a magnet underneath a substrate, showing lines of magnetic field of the magnet;
FIG. 3B is a schematic side cross-sectional view of a substrate supporting magnetic flakes aligned along the magnetic field lines of the magnet shown in FIG. 3A;
FIGs. 4A to 4C are side cross-sectional views of an inverted optically variable device of the present disclosure at different progressive stages of manufacturing;
FIG. 5 is a schematic plan view of an optically varying device according to the present invention, in which the adhesive layer is patterned to form a banknote denomination "100";
FIG. 6A is a plan-view photograph of an optically variable device, in which magnetic flakes have been aligned on a layer of adhesive ink with a spherical-cylindrical magnet pair including a cylindrical magnet and a spherical magnet centered on top of the cylindrical magnet that help illustrate the present invention;
FIG. 6B is an oblique-view photograph of the optically variable device of FIG.6A;
FIG. 7A is a side cross-sectional view of the spherical-cylindrical magnet pair used to align magnetic flakes of the prototypes of FIGs. 6A and 6B, showing a viewing direction of FIG. 6A;
Fig. 7B is a side cross-sectional view of the spherical-cylindrical magnet pair used to align magnetic flakes of the prototypes of FIGs. 6A and 6B, showing a viewing direction of FIG. 6B;
FIG. 7C is a top view of the spherical-cylindrical magnet pair used to align magnetic flakes of the prototypes of FIGs. 6A and 6B;
FIG. 8A is a plan-view photograph of an optically variable device, in which magnetic flakes have been aligned on a layer of adhesive ink with a spherical-cylindrical magnet pair including a spherical magnet atop of and near an edge of a cylindrical magnet;
FIG. 8B is an oblique-view photograph of the optically variable device of FIG. 8A;
FIG. 9A is a side cross-sectional view of the spherical-cylindrical magnet pair used to align magnetic flakes of the prototypes of FIGs. 8A and 8B, showing a viewing direction of FIG. 8A;
Fig. 9B is a side cross-sectional view of the spherical-cylindrical magnet pair used to align magnetic flakes of the prototypes of FIGs. 8A and 8B, showing a viewing direction of FIG. 8B;
FIG. 9C is a plan view of the spherical-cylindrical magnet pair used to align magnetic flakes of the prototypes of FIGs. 8A and 8B;
FIG. lOA is a plan-view photograph of an optically variable device, in which magnetic flakes have been aligned on a layer of adhesive ink with a cylindrical-rectangular magnet pair including a cylindrical magnet on top of a rectangular magnet;
FIG. 10B is an oblique-view photograph of the optically variable device of FIG 10A
FIG. 11 A is a side cross-sectional view of the cylindrical-rectangular magnet pair used to align magnetic flakes of the prototypes of FIGs. 10A and 10B, showing a viewing direction
Fig. 11B is a side cross-sectional view of the cylindrical-rectangular magnet pair used to align magnetic flakes of the prototypes of FIGs. 10A and 10B, showing a viewing direction of FIG. 10B;
FIG. 11C is a plan view of the cylindrical-rectangular magnet pair used to align magnetic flakes of the prototypes of FIGs. lOA and lOB;
FIG. 12A is a plan-view photograph of an optically variable device, in which magnetic flakes have been aligned on a layer of varnish with the cylindrical-rectangular magnet pair of FIGs. 11A-11C;
**FIG.** 12B is an oblique-view photograph of the optically variable device of FIG. 12A;
FIG. 13A is a plan-view photograph of an optically variable device, in which magnetic flakes have been applied to a layer of a UV-cured adhesive ink with the cylindrical rectangular magnet pair of FIGs. 11A-11C;
FIG. 13B is an oblique-view photograph of the optically variable device of FIG. 13A;
FIG. 14A is a plan-view photograph of an optically variable device, in which magnetic flakes have been applied to a layer of an uncured adhesive ink with the rectangular cylindrical magnet pair of FIGs. 11A-11C; and
FIG. 14B is an oblique-view photograph of the optically variable device of FIG. 14A.

### DETAILED DESCRIPTION

While the present teachings are described in conjunction with various embodiments and examples, it is not intended that the present teachings be limited to such embodiments. On the contrary, the present teachings encompass various alternatives and equivalents, as will be appreciated by those of skill in the art.

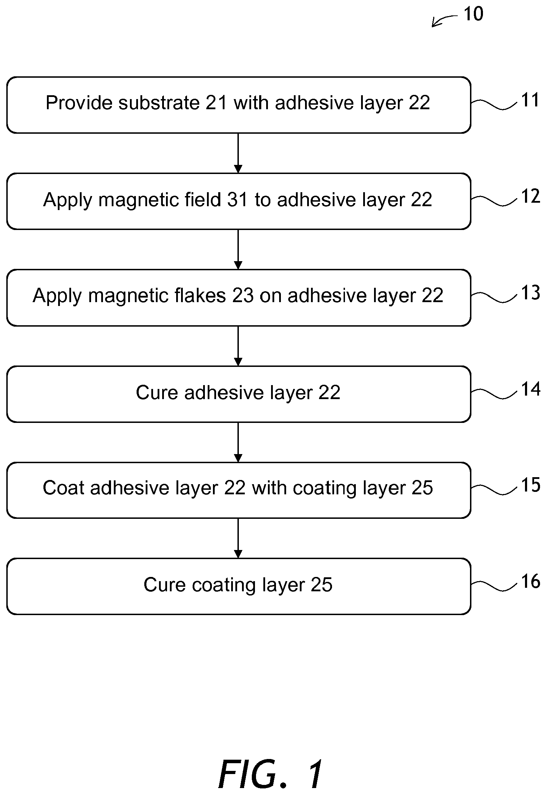

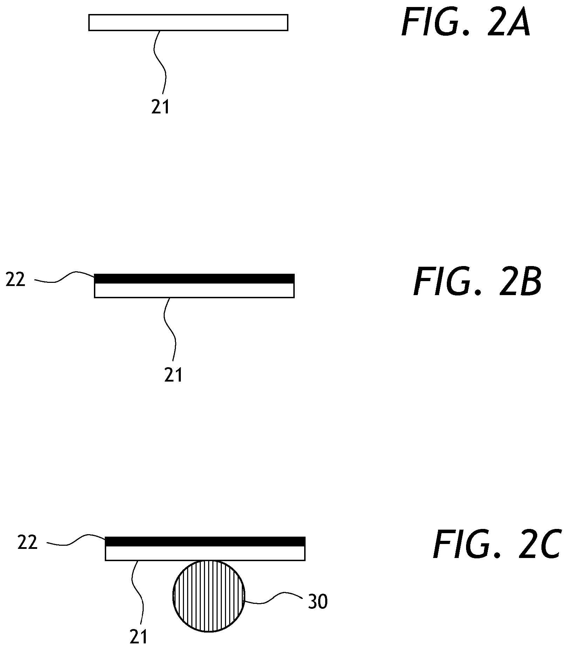

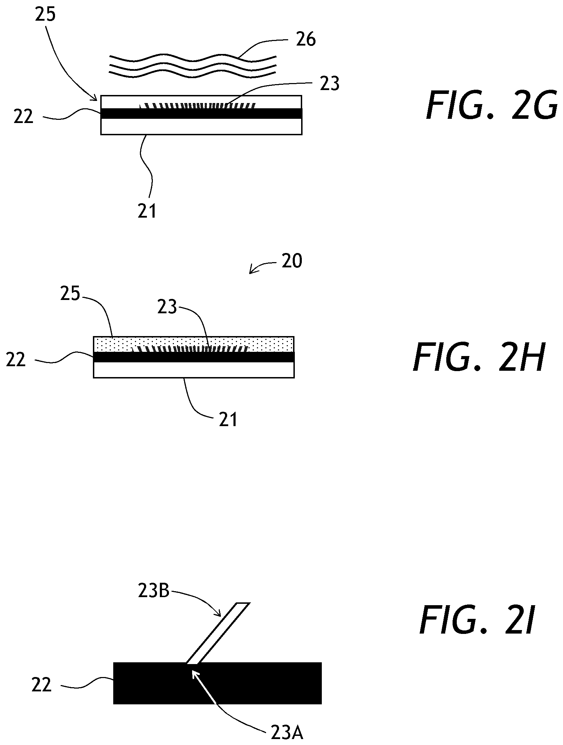

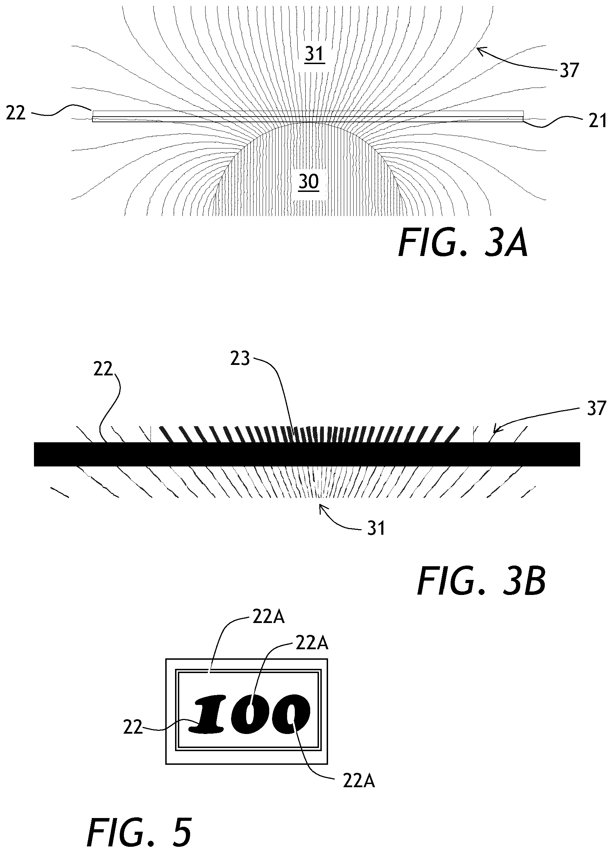

Referring to FIG. 1 with further reference to FIGs. 2A-2H, 3A, and 3B, an embodiment of a method 10 (FIG. 1) of manufacturing an optically variable device 20 according to the present invention (the manufactured device is shown in FIG. 2H) can be achieved by including a step 11 of providing a substrate 21 with an adhesive layer 22 (FIG. 2B) on the substrate 21 (FIGs. 2A, 2B), which may be deposited, for example, by coating or printing. The substrate 21 is provided with the adhesive layer 22 already present on the substrate 21, and the adhesive 22 may require only activation, for example by heating. In a magnetic field application step 12, a magnetic field 31 (FIG. 3A) is applied, for example by providing a permanent magnet 30 (FIGs. 2C and 3A) under the substrate 21 (FIGs. 2C and 3A). An electromagnet may also be used. The magnetic field 31 generated by the magnet 30 extends through and over the adhesive layer 22 (FIG. 3A).

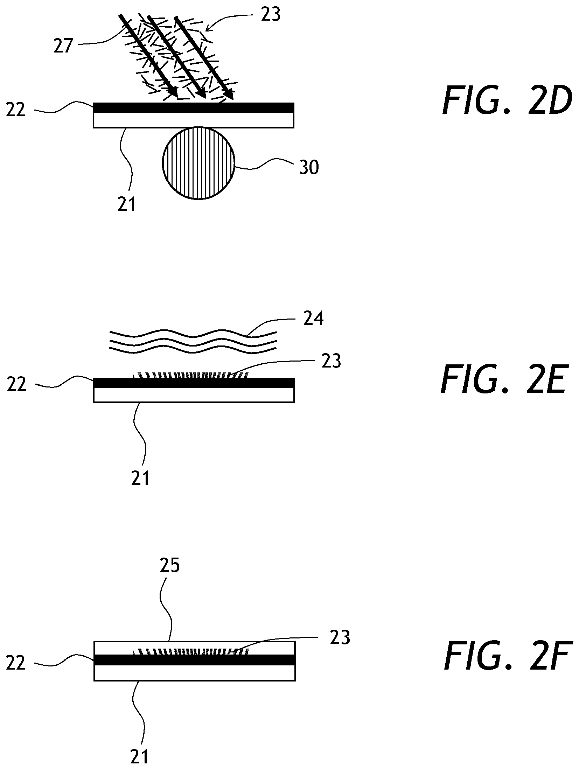

In a flake application step 13, magnetic flakes 23 are applied to the adhesive layer 22, for example, by blowing the magnetic flakes 23 onto the adhesive layer 22 using a stream 27 of gas e.g. air, argon, or nitrogen, having the magnetic flakes 23 suspended in the stream 27 of gas and carried by the stream 27 of gas, as shown schematically in FIG. 2D. Alternatively, the magnetic flakes 23 may be provided by dusting, or spreading the magnetic flakes 23 with the help of mechanical means, such as a blade, for example. Upon reaching the adhesive layer 22, the magnetic flakes 23 may adhere to the adhesive layer 22 (FIG. 2E). The magnetic field 31 causes the magnetic flakes 23 to become oriented or aligned along field lines 37 of the magnetic field 31 (FIG. 3B).

The magnetic flakes 23 are applied to the adhesive layer 22 in presence of the magnetic field 31. In case of dusting of deposition with gaseous stream, the magnetic field 31 facilitates orientation of the magnetic flakes 23 during their flight towards the adhesive layer 22, so that the magnetic flakes 23 may land onto the adhesive layer 22 already oriented along the magnetic field 31 lines. If the magnetic field 31 is not applied in the flake application step 13, some of the magnetic flakes 23 may land flat on and adhere flat to the adhesive layer 22, which may make hinder their further orientation of the magnetic flakes 23 by the magnetic field 31.

In the adhesive layer curing step 14 of the method 10 (FIG. 1), the adhesive layer 22 may be fully cured e.g. by applying heat 24 (FIG. 2E), ultraviolet (UV) light, etc., after application of the magnetic flakes 23 in the flake application step 13. The adhesive layer 22 may be already partially cured (partially uncured) prior to application of the magnetic flakes 23.

In a coating step 15 of the method 10 (FIG. 1), the adhesive layer 22 having the magnetic flakes 23 adhered to the adhesive layer 22, or anchored in the adhesive layer 22, is coated with a coating layer 25 (FIG. 2F), for example a transparent adhesive layer or a varnish layer. The coating layer 25 may also include a semi-transparent colored layer in combination with the magnetic flakes 23, which may be colored or non-colored. In a curing step 16, the coating layer 25 is cured e.g. by applying heat 26, UV light, or both (FIG. 2G), so as to substantially preserve the orientation of the magnetic flakes 23 after the magnetic field 31 is removed. In this step, the adhesive layer 22 may also be fully cured, from a partially or fully uncured state.

A second adhesive layer, not shown, may be provided on top of the adhesive layer 22 or beside the adhesive layer 22. A second magnetic field, not shown, may be applied to the second adhesive layer, and second magnetic flakes may be provided onto the second adhesive layer in the presence of the second magnetic field so that the second magnetic flakes oriented by the second magnetic field adhere to the second adhesive layer. The second magnetic flakes are absent a liquid carrier or binder. The second magnetic field may be different from the magnetic field 31, for example the second magnetic field may have a different orientation or strength, or field lines pattern. The second magnetic flakes may also be different from the magnetic flakes 23, for example the second magnetic flakes may have different color, size, material composition, etc. Magnetic fields and different flake types may be applied consecutively to obtain multi-color 3D indicia.

The manufactured optically variable device 20 is shown in FIG. 2H. The optically variable device 20 includes the substrate 21, the adhesive layer 22 over the substrate 21, and the magnetic flakes 23 supported by the adhesive layer 22. The magnetic flakes 23 are adhered to the substrate 21, and may appear extending from the substrate 32. The magnetic flakes 23 are oriented by the magnetic field 31 (FIGs. 3A and 3B). Herein, the term "oriented" means that the magnetic flakes 23 are aligned, that is, disposed in a non-random, coordinated fashion. The coating layer 25 extends over the substrate 21 adjacent the adhesive layer 22, encapsulating the magnetic flakes 23. As seen in FIG 2I, a portion 23A of the magnetic flake 23 is adhesively attached to the adhesive layer 22, and another portion 23B of the same magnetic flake 23 extends out of the adhesive layer 22 into the coating layer 25. In one embodiment, the magnetic field 31 may be configured to have the field lines parallel to the surface of the substrate 21. Most of the flakes 23 planarized by the magnetic field 31 would have one major side in contact with the adhesive layer 22, and another major side in contact with the coating layer 25.

Application of the magnetic flakes 23 and the coating layer 25 in separate steps may enable resulting optically variable devices 20 to remain quite thin. Essentially, the minimal thickness of the coating layer 25 is limited by size of individual flakes 23. For instance, for <20 micrometer sized flakes, the coating layer 25 thickness may remain as small as 20-40 micrometers. In the flake application step 13, the magnetic flakes 23 are applied to the adhesive layer 22 absent the coating layer 25. The magnetic flakes 23 may extend from the adhesive layer 22 e.g. by 15-20 micrometers. Once the magnetic flakes 23 adhere to the adhesive layer 22, being oriented along the field lines 37 of the magnetic field 31, the coating layer 25 may be applied to the adhesive layer 22 in the coating step 15, to encapsulate the magnetic flakes 23 within the coating layer 25, which can remain as thin as 100 micrometers. It is preferred that the coating layer 25 be substantially transparent to visible light, being colorless or colored, depending on required optical performance of the optically variable device 20. Smaller magnetic flakes 23, for example having an average size of 5 to 10 micrometers, may be preferable, depending on a particular printing application.

The magnetic flakes 23 may be reflective, e.g. the magnetic flakes 23 may have an optical reflectivity at visible wavelengths between 380nm and 750nm of at least 50%. Reflective magnetic flakes 23, when oriented, for example by a spherical or conical permanent magnet, may create a visual appearance of a metallic 3D-looking object, due to apparent reflectivity varying with illumination angle and, or observation angle. The magnetic flakes 23 may also include pearlescent or multilayer color-shifting coatings, which change color upon a change of angle of observation or illumination. Flakes which include multilayer color-shifting coatings may create a visual appearance of color-shifting 3D-looking objects, and may be particularly attractive for optical security applications. The magnetic flakes 23 may also have low reflectivity, so as to appear dark or black on a light background.

The shape of 3D-looking objects depends on shape and magnetization direction of the magnet 30 placed under the substrate 21 (FIG. 3A). The magnet 30 may be shaped and oriented to create the magnetic field 31 of a particular configuration. Furthermore, the resulting 3D looking shape may be inverted by flipping over the structure of the optically variable device 20.

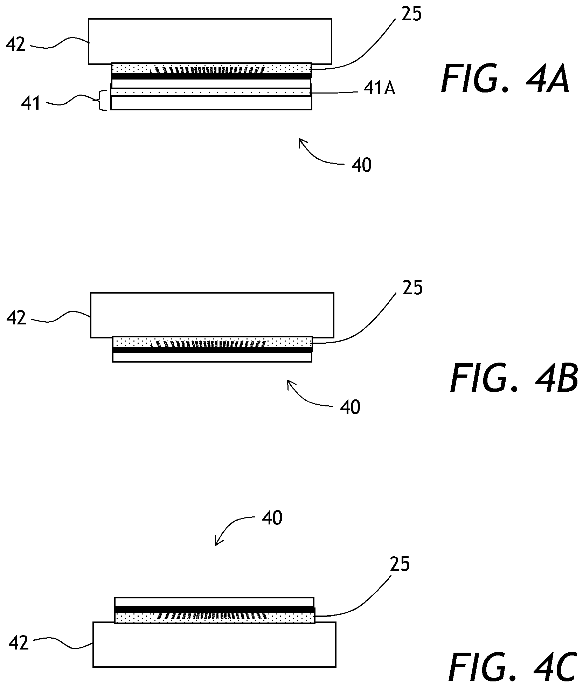

Turning to FIGs. 4A-4C with further reference to FIG. 1, an optically variable device 40 may be manufactured using the method 10 of FIG. 1. A substrate 41 of the optically variable device 40 includes a release layer 41A. The coating layer 25 may be adhered to a second substrate 42 as shown in FIG. 4A. The release layer 41A may be then removed as shown in FIG. 4B, resulting in the optically variable device 40 being supported upside down by the second substrate 42, as shown in FIG. 4C.

Referring to FIG. 5, the adhesive layer 22 includes voids 22A in the adhesive layer 22, e.g. forming visible indicia such as the number "100", for example. The voids 22A in the adhesive layer 22 may be formed using any suitable method, such as silk screen printing or other printing methods, lithography, etc. Once the magnetic flakes 23 are applied to the adhesive layer 22 in the flake application step 13 of the method 10, the magnetic flakes applied to the voids 22A may be removed, for example, by directing a flow of gas on the voids 22A or by shaking. Masking may be applied while printing the adhesive, and, or providing the magnetic flakes 23, and, or providing further coating. For added security, the magnetic flakes 23 may optionally include a diffractive pattern and, or covert identification indicia discernible under magnification.

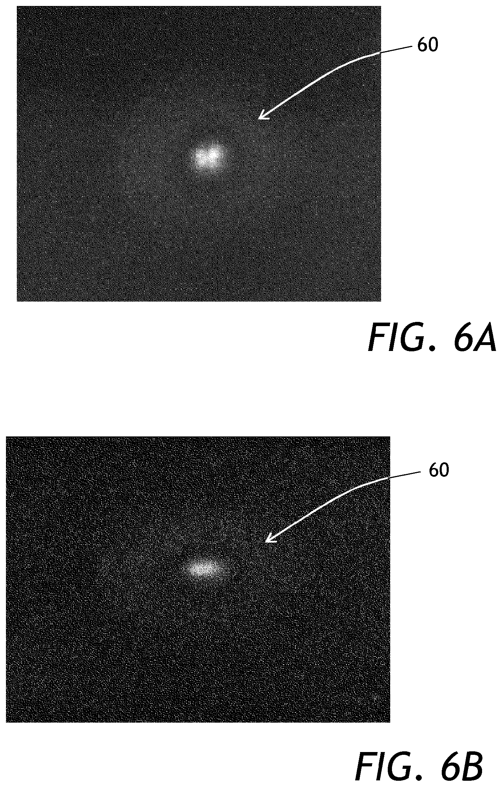

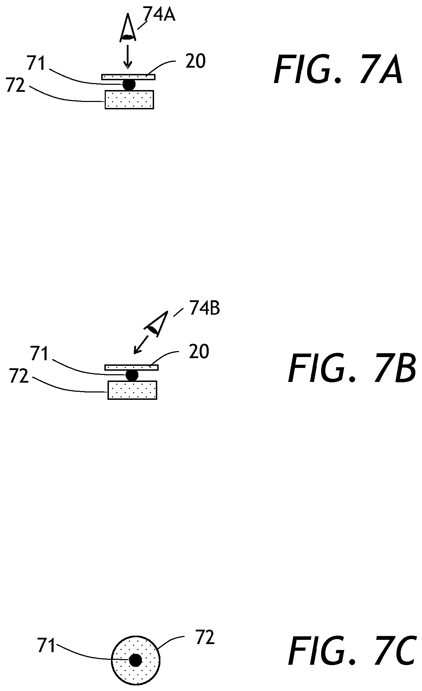

Several prototypes of the optically variable device 20 (FIG. 2H) have been manufactured, and optically variable performance of the prototypes has been evaluated. To help illustrate the performance the present invention, and referring to FIGs. 6A, 6B, and 7A-7C, with further reference to FIG. 2H, a plan-view photograph (FIG. 6A) of a prototype of the optically variable device 20 (FIG. 2H) is shown. The adhesive layer 22 of the prototype of FIG. 6A included an adhesive ink layer, the magnetic flakes 23 included a color-shifting magnetic pigment changing color from gold at normal angle of viewing to green color at oblique angles. The coating layer 25 included varnish. The adhesive ink was cured prior to application of the varnish.

To provide a 3D appearance of a metal ball image 60 seen in the photograph of FIG. 6A, a spherical-cylindrical magnet pair including a spherical magnet 71 atop a cylindrical magnet 72 (FIG. 7A) has been placed under the optically variable device 20. The direction of viewing of FIG. 6A is shown in FIG. 7A at 74A. The direction of viewing 74A is shown in FIGs. 7A and 7B superimposed with the spherical 71 and cylindrical 72 magnets only to illustrate the geometry of the magnets in relation to the geometry of observation. For an actual observation, the spherical 71-cylindrical 72 magnet pair was removed. In FIG. 6B, the same prototype is viewed at an oblique angle shown in FIG. 7B at 74B. FIG. 7C shows a plan view of the spherical 71-cylindrical 72 magnet pair.

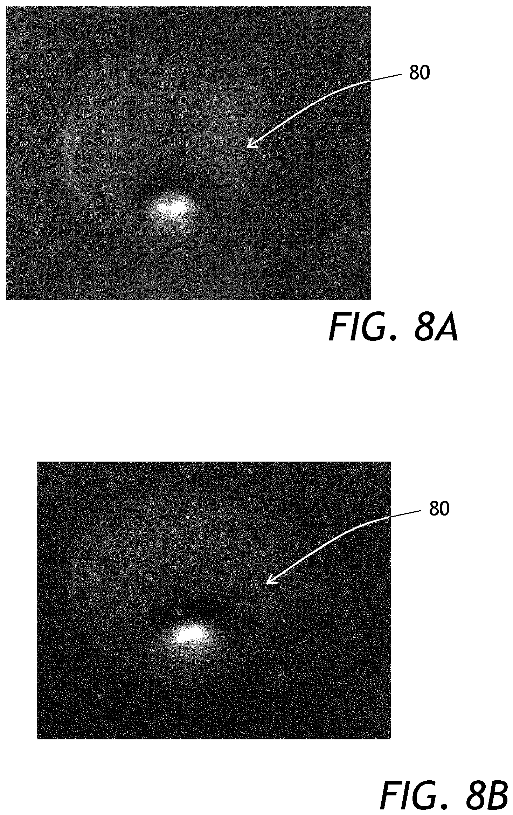

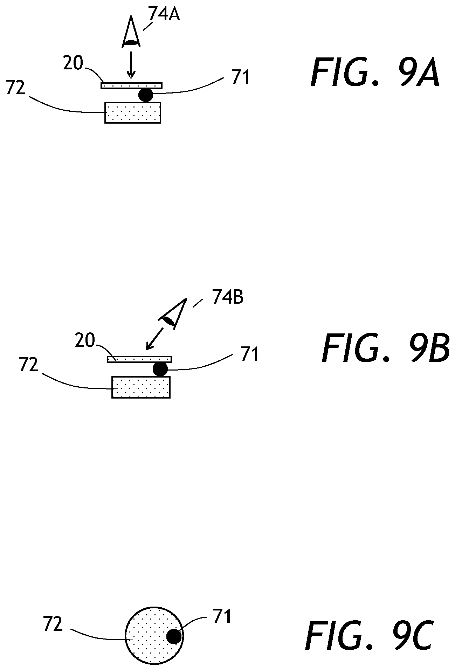

Referring to FIGs. 8A, 8B, and 9A-9C, with further reference to FIGs. 2H and 6A, a prototype of FIG. 8A has a similar layer structure as the prototype of FIG. 6A, the only difference being the position of the spherical magnet 71 (FIG. 9A) in the magnet pair used to orient the magnetic flakes 23 (FIG. 2H). In FIG. 9A, the direction of viewing is shown at 74A. In FIGs. 9A and 9B, the spherical magnet 71 is positioned close to an edge of the cylindrical magnet 72, resulting in a shifted position of a metal ball image 80 in FIGs. 8A and 8B. In FIG. 8B, the prototype of FIG. 8A is viewed at an oblique angle, as shown in FIG. 9B at 74B. FIG. 9C shows a plan view of the spherical 71-cylindrical 72 magnet pair.

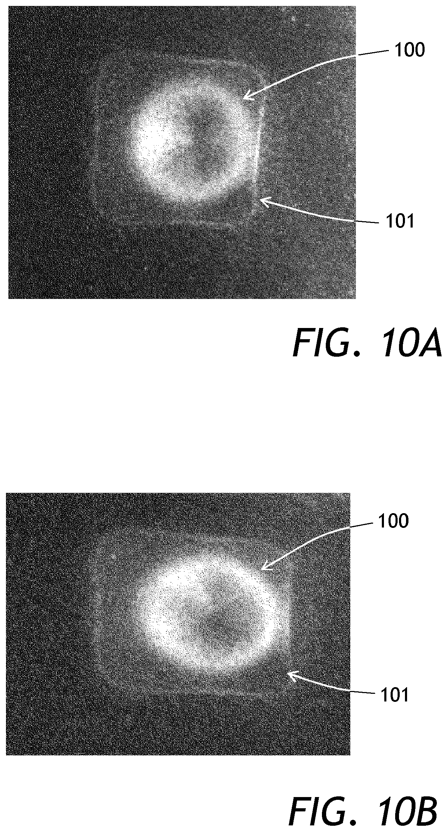

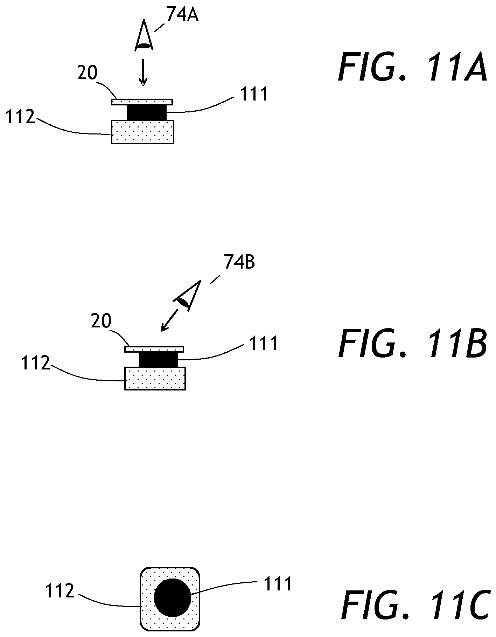

Turning to FIGs. 10A, 10B, and 11A-11C, with further reference to FIGs. 2H and 6A, a prototype of FIG. 10A has a similar layer structure as the prototype of FIG. 6A, the only difference being that instead of the spherical 71- cylindrical 72 magnet pair, a cylindrical 111 - rectangular 112 magnet pair (FIGs. 11A-11C) is used to orient the magnetic flakes 23 (FIG. 2H) to form an image of a 3D cone 100 within a round-cornered rectangle 101 (FIGs. lOA, 1OB). The direction of viewing corresponding to FIG. 10A is shown at in FIG. 11A at 74A. In FIG. 10B, the same prototype is viewed at an oblique viewing angle shown in FIG. 11B at 74B. FIG. 11C shows a plan view of the cylindrical 111 -rectangular 112 magnet pair.

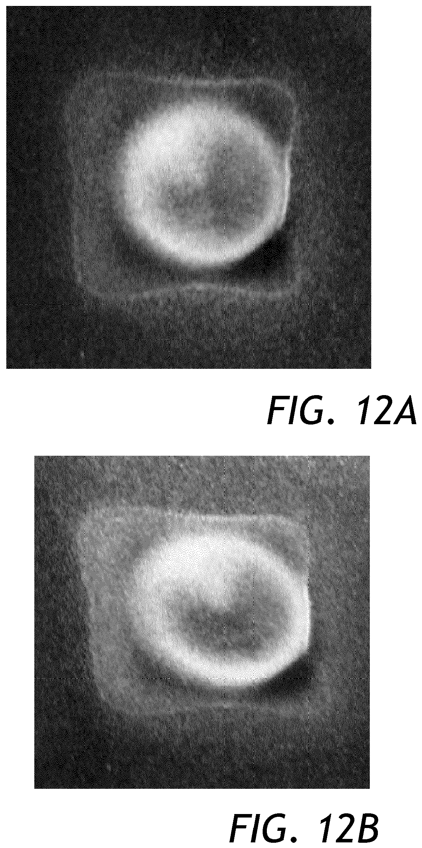

The cylindrical 111 - rectangular 112 magnet pair shown in FIGs. 1A-11C has been used to orient the magnetic flakes 23 in prototypes of FIGs. 12A, 12B, 13A, 13B, 14A, and 14B described below. These prototypes have been manufactured with different layer materials, using varying layer curing schedules.

In a prototype shown in FIGs.12A and 12B, the adhesive layer 22 (FIG. 2H) included not adhesive ink but a same varnish material as the coating layer 25. The varnish of the adhesive layer 22 was cured after application of the Go/Gr color-shifting magnetic pigment flakes. The 3D effect was present, as can be seen by comparing FIGs. 12A and 12B, when the varnish was used in the adhesive layer 22.

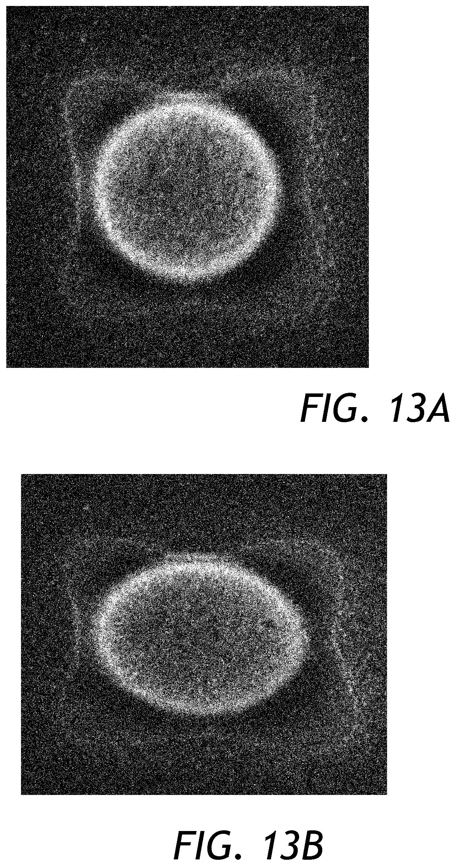

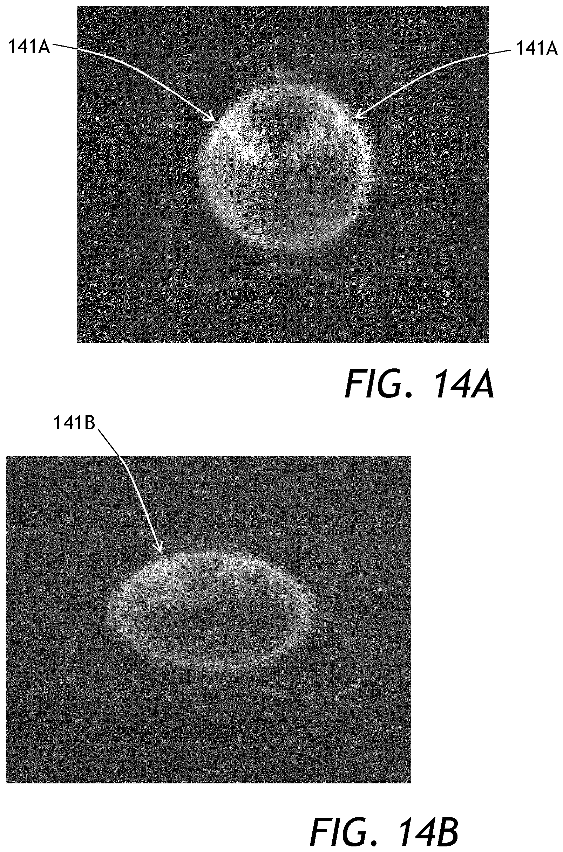

In a prototype shown in FIGs. 13A and 13B, a UV-curable adhesive ink was used to form the adhesive layer 22. The UV-curable adhesive ink was pre-cured by UV light prior to application of achromatic magnetic flakes 23, which included 5 layers MgF2/Al/magnetic layer/Al/MgF2. The 3D cone was not observed. In a prototype shown in FIGs. 14A and 14B, the UV-curable adhesive ink was not pre-cured prior to application of the achromatic magnetic flakes 23. Rather, the UV-curable adhesive ink was cured after the application of the achromatic magnetic flakes 23. 3D cone features 141A (FIG. 14A) and 141B (FIG. 14B) were observed with this prototype. Therefore, it may be preferable to cure the adhesive layer 22 (FIG. 2E and step 14 of the method 10 of FIG. 1) after application of the magnetic flakes 23 on the adhesive layer 22 (FIG. 2D and step 13 of the method 10 of FIG. 1).

## Claims

1. A method of manufacturing an optically variable device (40), the method comprising: providing a substrate (21) with a first adhesive layer (22) thereon;
applying a first magnetic field (31) to the first adhesive layer and providing magnetic flakes (23) absent a liquid carrier or binder onto the first adhesive layer in the presence of the first magnetic field so that the magnetic flakes oriented by the first magnetic field adhere to the first adhesive layer;
coating the first adhesive layer and the magnetic flakes adhered thereto with a coating layer (25); and
curing the coating layer, so as to substantially maintain orientation of the magnetic flakes;
**characterised in that** the first adhesive layer (22) comprises voids (22A), so as to form visible indicia.

2. The method of claim 1, wherein the first adhesive layer (22) is at least partially uncured when the magnetic flakes (23) are provided onto the first adhesive layer, the method further comprising curing the first adhesive layer after the magnetic flakes have adhered thereto.

3. The method of claim 2, wherein the adhesive and coating layers (22, 25) are cured together.

4. The method of claim 1, wherein the first adhesive layer comprising the voids therein is formed by printing.

5. The method of any one of claims 1 to 4, wherein the magnetic flakes (23) are provided onto the first adhesive layer (22) while applying the first magnetic field (31).

6. The method of claim 5, wherein the magnetic flakes (23) are provided onto the first adhesive layer (22) by blowing the magnetic flakes onto the first adhesive layer using a stream of gas comprising the magnetic flakes suspended therein.

7. The method of claim 1, the method further comprising removing magnetic flakes (23) from the voids (22A) by directing a flow of gas on the voids.

8. The method of claim 1, wherein the magnetic flakes (23) comprise a multilayer color shifting coating.

9. The method of claim 1, wherein the substrate comprises a release layer (41A), the method further comprising adhering the coating layer (25) to a second substrate (42) and removing the release layer.

10. The method of claim 1, further comprising providing a second adhesive layer on top of the first adhesive layer (22) or beside the first adhesive layer;
applying a second magnetic field to the second adhesive layer, and providing second magnetic flakes absent a liquid carrier or binder onto the second adhesive layer in the presence of the second magnetic field so that the second magnetic flakes oriented by the second magnetic field adhere to the second adhesive layer; and
curing the second adhesive layer.

11. The method of claim 10, wherein the second magnetic field is different from the first magnetic field (31), or wherein the second magnetic flakes are different from the first magnetic flakes (23).

12. The method of claim 1, wherein the coating layer (25) is colored.

13. An optically variable device obtained from the method of any one of claims 1-12, comprising:
a substrate (21);
an adhesive layer (22) over the substrate;
a plurality of oriented magnetic flakes (23) supported by the adhesive layer; and
a coating layer (25) over the substrate adjacent the adhesive layer, wherein the coating encapsulates the magnetic flakes extending from the adhesive layer, wherein a portion of each one of the plurality of oriented magnetic flakes is adhesively attached to the adhesive layer, and a remaining portion of the same magnetic flake extends out of the adhesive layer into the coating layer, **characterised in that** the adhesive layer comprises voids (22A) therein, so as to form visible indicia.

14. The optically variable device of claim 13, wherein at least some of the plurality of oriented magnetic flakes (23) comprise a multilayer color-shifting coating.

## Patentansprüche

1. Ein Verfahren zum Herstellen einer optisch variablen Vorrichtung (40), wobei das Verfahren Folgendes beinhaltet:
Bereitstellen eines Substrats (21) mit einer ersten Haftschicht (22) darauf;
Anlegen eines ersten Magnetfelds (31) an die erste Haftschicht und Bereitstellen von magnetischen Flocken (23) ohne einen flüssigen Träger oder ein flüssiges Bindemittel auf der ersten Haftschicht in Gegenwart des ersten Magnetfelds, sodass die magnetischen Flocken, die durch das erste Magnetfeld ausgerichtet werden, an der ersten Haftschicht haften;
Beschichten der ersten Haftschicht und der daran haftenden magnetischen Flocken mit einer Beschichtungsschicht (25); und
Aushärten der Beschichtungsschicht, um die Ausrichtung der magnetischen Flocken im Wesentlichen aufrechtzuerhalten;
**dadurch gekennzeichnet, dass** die erste Haftschicht (22) Aussparungen (22A) beinhaltet, um sichtbare Zeichen zu bilden.

2. Verfahren gemäß Anspruch 1, wobei die erste Haftschicht (22) mindestens teilweise nicht ausgehärtet ist, wenn die magnetischen Flocken (23) auf der ersten Haftschicht bereitgestellt werden, wobei das Verfahren ferner das Aushärten der ersten Haftschicht beinhaltet, nachdem die magnetischen Flocken daran angehaftet sind.

3. Verfahren gemäß Anspruch 2, wobei die Haft- und die Beschichtungsschicht (22, 25) zusammen ausgehärtet werden.

4. Verfahren gemäß Anspruch 1, wobei die erste Haftschicht, die die Aussparungen darin beinhaltet, durch Drucken gebildet wird.

5. Verfahren gemäß einem der Ansprüche 1 bis 4, wobei die magnetischen Flocken (23) auf der ersten Haftschicht (22) bereitgestellt werden, während das erste Magnetfeld (31) angelegt wird.

6. Verfahren gemäß Anspruch 5, wobei die magnetischen Flocken (23) auf der ersten Haftschicht (22) bereitgestellt werden, indem die magnetischen Flocken unter Verwendung eines Gasstroms, der die darin suspendierten magnetischen Flocken beinhaltet, auf die erste Haftschicht geblasen werden.

7. Verfahren gemäß Anspruch 1, wobei das Verfahren ferner das Entfernen von magnetischen Flocken (23) aus den Aussparungen (22A) durch Richten einer Gasströmung auf die Aussparungen beinhaltet.

8. Verfahren gemäß Anspruch 1, wobei die magnetischen Flocken (23) eine mehrschichtige Farbverschiebungsbeschichtung beinhalten.

9. Verfahren gemäß Anspruch 1, wobei das Substrat eine Trennschicht (41A) beinhaltet, wobei das Verfahren ferner das Anhaften der Beschichtungsschicht (25) an einem zweiten Substrat (42) und das Entfernen der Trennschicht beinhaltet.

10. Verfahren gemäß Anspruch 1, das ferner das Bereitstellen einer zweiten Haftschicht auf der ersten Haftschicht (22) oder neben der ersten Haftschicht beinhaltet;
Anlegen eines zweiten Magnetfelds an die zweite Haftschicht und Bereitstellen von zweiten magnetischen Flocken ohne einen flüssigen Träger oder ein flüssiges Bindemittel auf der zweiten Haftschicht in Gegenwart des zweiten Magnetfelds, sodass die zweiten magnetischen Flocken, die durch das zweite Magnetfeld ausgerichtet werden, an der zweiten Haftschicht haften; und
Aushärten der zweiten Haftschicht.

11. Verfahren gemäß Anspruch 10, wobei sich das zweite Magnetfeld von dem ersten Magnetfeld (31) unterscheidet oder wobei sich die zweiten magnetischen Flocken von den ersten magnetischen Flocken (23) unterscheiden.

12. Verfahren gemäß Anspruch 1, wobei die Beschichtungsschicht (25) gefärbt ist.

13. Eine optisch variable Vorrichtung, die aus dem Verfahren gemäß einem der Ansprüche 1-12 erhalten wird, die Folgendes beinhaltet:
ein Substrat (21);
eine Haftschicht (22) über dem Substrat;
eine Vielzahl von ausgerichteten magnetischen Flocken (23), die von der Haftschicht getragen werden; und
eine Beschichtungsschicht (25) über dem Substrat angrenzend an die Haftschicht, wobei die Beschichtung die magnetischen Flocken, die sich von der Haftschicht erstrecken, einkapselt, wobei ein Abschnitt jeder der Vielzahl von ausgerichteten magnetischen Flocken haftend an der Haftschicht angebracht ist und sich ein verbleibender Abschnitt derselben magnetischen Flocke aus der Haftschicht in die Beschichtungsschicht erstreckt, **dadurch gekennzeichnet, dass** die Haftschicht Aussparungen (22A) darin beinhaltet, um sichtbare Zeichen zu bilden.

14. Optisch variable Vorrichtung gemäß Anspruch 13, wobei mindestens einige der Vielzahl von ausgerichteten magnetischen Flocken (23) eine mehrschichtige Farbverschiebungsbeschichtung beinhalten.

## Revendications

1. Un procédé de fabrication d'un dispositif optiquement variable (40), le procédé comprenant :
la fourniture d'un substrat (21) avec une première couche adhésive (22) sur celui-ci ;
l'application d'un premier champ magnétique (31) à la première couche adhésive et la fourniture de paillettes magnétiques (23) dépourvues de liant ou de support liquide sur la première couche adhésive en présence du premier champ magnétique de sorte que les paillettes magnétiques orientées par le premier champ magnétique adhèrent à la première couche adhésive ;
le revêtement de la première couche adhésive et des paillettes magnétiques ayant adhéré à celle-ci avec une couche de revêtement (25) ; et
le durcissement de la couche de revêtement, de manière à maintenir substantiellement l'orientation des paillettes magnétiques ;
**caractérisé en ce que** la première couche adhésive (22) comprend des vides (22A), de manière à former des indications visibles.

2. Le procédé de la revendication 1, dans lequel la première couche adhésive (22) est au moins partiellement non durcie lorsque les paillettes magnétiques (23) sont fournies sur la première couche adhésive, le procédé comprenant en outre le durcissement de la première couche adhésive après que les paillettes magnétiques ont adhéré à celle-ci.

3. Le procédé de la revendication 2, dans lequel les couches adhésive et de revêtement (22, 25) sont durcies ensemble.

4. Le procédé de la revendication 1, dans lequel la première couche adhésive comprenant les vides dans celle-ci est formée par impression.

5. Le procédé de l'une quelconque des revendications 1 à 4, dans lequel les paillettes magnétiques (23) sont fournies sur la première couche adhésive (22) pendant l'application du premier champ magnétique (31).

6. Le procédé de la revendication 5, dans lequel les paillettes magnétiques (23) sont fournies sur la première couche adhésive (22) par soufflage des paillettes magnétiques sur la première couche adhésive au moyen d'un courant de gaz comprenant les paillettes magnétiques en suspension dans celui-ci.

7. Le procédé de la revendication 1, le procédé comprenant en outre le retrait des paillettes magnétiques (23) des vides (22A) en dirigeant un flux de gaz sur les vides.

8. Le procédé de la revendication 1, dans lequel les paillettes magnétiques (23) comprennent un revêtement à variation de couleur multicouche.

9. Le procédé de la revendication 1, dans lequel le substrat comprend une couche de séparation (41A), le procédé comprenant en outre l'adhésion de la couche de revêtement (25) à un deuxième substrat (42) et le retrait de la couche de séparation.

10. Le procédé de la revendication 1, comprenant en outre la fourniture d'une deuxième couche adhésive sur le dessus de la première couche adhésive (22) ou à côté de la première couche adhésive ;
l'application d'un deuxième champ magnétique à la deuxième couche adhésive, et la fourniture de deuxièmes paillettes magnétiques dépourvues de liant ou de support liquide sur la deuxième couche adhésive en présence du deuxième champ magnétique de sorte que les deuxièmes paillettes magnétiques orientées par le deuxième champ magnétique adhèrent à la deuxième couche adhésive ; et
le durcissement de la deuxième couche adhésive.

11. Le procédé de la revendication 10, dans lequel le deuxième champ magnétique est différent du premier champ magnétique (31), ou dans lequel les deuxièmes paillettes magnétiques sont différentes des premières paillettes magnétiques (23).

12. Le procédé de la revendication 1, dans lequel la couche de revêtement (25) est colorée.

13. Un dispositif optiquement variable obtenu par le procédé de l'une quelconque des revendications 1 à 12, comprenant :
un substrat (21) ;
une couche adhésive (22) par-dessus le substrat ;
une pluralité de paillettes magnétiques orientées (23) supportées par la couche adhésive ; et
une couche de revêtement (25) par-dessus le substrat adjacente à la couche adhésive, dans lequel le revêtement encapsule les paillettes magnétiques s'étendant à partir de la couche adhésive, dans lequel une portion de chacune de la pluralité de paillettes magnétiques orientées est fixée de manière adhésive à la couche adhésive, et une portion restante de la même paillette magnétique s'étend hors de la couche adhésive dans la couche de revêtement, **caractérisé en ce que** la couche adhésive comprend des vides (22A) dans celle-ci, de manière à former des indications visibles.

14. Le dispositif optiquement variable de la revendication 13, dans lequel au moins certaines de la pluralité de paillettes magnétiques orientées (23) comprennent un revêtement à variation de couleur multicouche.
